# EUROPEAN PATENT SPECIFICATION

(11) **EP 3 486 017 B1**
(45) Date of publication and mention of the grant of the patent: **20.01.2021**
(21) Application number: 18214174.7
(22) Date of filing: 20.02.2012
(51) Int. Cl.: B23F 21/02, B23F 5/04

(54) **SCREW-SHAPED GRINDSTONE FOR GRINDING GEARS AND METHOD FOR GRINDING GEARS**
SCHRAUBENFÖRMIGE SCHLEIFSCHEIBE ZUM SCHLEIFEN VON GETRIEBEN UND VERFAHREN ZUM SCHLEIFEN VON GETRIEBEN
MEULE EN FORME DE VIS POUR PONCER DES ENGRENAGES ET PROCÉDÉ DE PONCAGE D'ENGRENAGES

(30) Priority: 13.07.2011 JP 2011154381
(43) Date of publication of application: 22.05.2019
(62) Divisional of application: 12811833.8
(73) Proprietor: Mitsubishi Heavy Industries Machine Tool Co., Ltd., Ritto-shi, Shiga 520-3080 (JP)
(72) Inventor: YANASE, Yoshikoto, Tokyo, 108-8215 (JP); OCHI, Masashi, Tokyo, 108-8215 (JP)
(74) Representative: Studio Torta S.p.A.

(56) References cited:
- DE-A1-102004 020 364
- DE-B- 1 124 786
- JP-A- 2008 110 461
- US-A1- 2005 239 385
- US-A1- 2007 275 638

## Description

### TECHNICAL FIELD

The present invention relates to a threaded grinding wheel for gear grinding formed of threaded grinding wheels of two types differing in grinding performance, and to a gear grinding method using this threaded grinding wheel for gear grinding.

### BACKGROUND ART

As a method of grinding gears, a method has conventionally been well known which involves rotating a gear and a threaded grinding wheel in mesh with each other to grind the gear's tooth surfaces with the threaded grinding wheel's grinding surfaces.

Meanwhile, gears are important mechanical elements that transmit drive force, and the level of their machining accuracy affects machines' vibrations and noises. Particularly, in recent years, in the field of automobiles giving importance to comfortability, there have been increasing demands for improvement in the machining accuracy of gears for use in transmissions and like so as to eliminate causes of vibrations and noises.

In this respect, to improve the gear machining accuracy, threaded grinding wheels for gear grinding have conventionally been provided which have grinding surfaces of two types differing in grinding performance so that gear grinding can be performed in two steps. Such a threaded grinding wheel for gear grinding is disclosed in

Patent Document 1, for example.

### PRIOR ART DOCUMENT

### PATENT DOCUMENTS

Patent Document 1: Japanese Patent Application Publication No. 2011-73071
Patent Document 2: DE1124786 B.

### SUMMARY OF THE INVENTION

### PROBLEMS TO BE SOLVED BY THE INVENTION

Here, the above conventional threaded grinding wheel has a rough-finish grinding surface formed in a helical pattern and further a finish grinding surface formed in a helical pattern in an outer portion of the rough-finish grinding surface in the grinding-wheel radial direction.

However, forming the rough-finish grinding surface and the finish grinding surface next to each other in the grinding-wheel radial direction as mentioned above reduces the widthwise areas of both grinding surfaces. Thus, if one of the rough-finish grinding surface and the finish grinding surface is used to grind a gear, the other of the rough-finish grinding surface and the finish grinding surface may possibly contact the gear. Moreover, it is very difficult to form the finish grinding surface further in the helical rough-finish grinding surface, and it is remarkably so when the threaded grinding wheel itself is small. For this reason, in the case of the above conventional threaded grinding wheel, it is difficult to perform grinding by using only one of the grinding surfaces of two types differing in grinding performance, and therefore the gear machining accuracy may possibly fail to be improved sufficiently.

The present invention has been made to solve the above problems, and an object thereof is to provide a threaded grinding wheel for gear grinding and a gear grinding method which allow accurate gear grinding with a simple configuration.

### MEANS FOR SOLVING THE PROBLEMS

The aforementioned problems are solved by a barrel-shaped threaded grinding wheel for gear grinding, a gear grinding machine and a gear grinding method as claimed in the appended set of claims.

### EFFECTS OF THE INVENTION

Thus, the threaded grinding wheel for gear grinding according to the present invention can achieve accurate grinding of a machining-target gear with a simple configuration since it is formed of the first threaded grinding wheel and the second threaded grinding wheel of two types differing in grinding performance.

The gear grinding method according to the present can also achieve accurate grinding of a machining-target gear with a simple configuration since it uses the threaded grinding wheel formed of the first threaded grinding wheel and the second threaded grinding wheel of two types differing in grinding performance.

### BRIEF DESCRIPTION OF THE DRAWINGS

- Fig. 1 is a perspective view showing how a machining-target external gear is ground using a threaded grinding wheel for gear grinding, that does not make part of the present invention, but it is useful for its understanding.
- Fig. 2 is a side view of the threaded grinding wheel for gear grinding of figure 1.
- Fig. 3 is a perspective view showing how a machining-target internal gear is ground using a threaded grinding wheel for gear grinding according to present invention.
- [Fig. 4] Fig. 4 is a vertical cross-sectional view of the threaded grinding wheel for gear grinding according to the present invention.
- [Fig. 5] Fig. 5 is a plan view showing how the threaded grinding wheel for gear grinding according to the present invention meshes with a machining-target internal gear in an early stage.

### MODES FOR CARRYING OUT THE INVENTION

Hereinbelow, a threaded grinding wheel for gear grinding and a gear grinding method according to the present invention will be described in detail with reference to the drawings.

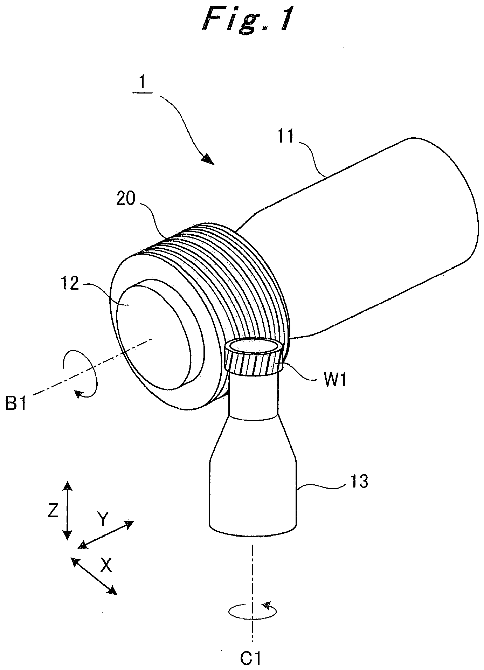

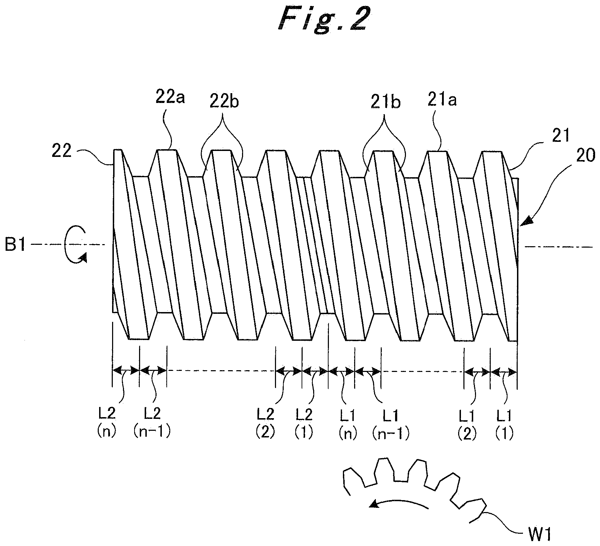

First, a threaded grinding wheel for gear grinding and a gear grinding method using this that does not make part of the present invention, but that are useful for its understanding, will be described in detail with reference to Figs. 1 and 2.

As shown in Fig. 1, a grinding-wheel head 11 is supported on a gear grinding machine 1 movably in an X-axis direction (grinding-wheel cut-in direction) and a Y-axis direction (grinding-wheel shift direction) which are horizontal, as well as in a Z-axis direction (grinding-wheel feed direction) which is vertical. Moreover, a spindle 12 is supported on the grinding-wheel head 11 rotatably about a grinding-wheel rotation axis B1. A threaded grinding wheel 20 for external gear grinding formed in a cylindrical shape is detachably mounted to the tip of the spindle 12.

Thus, by driving the grinding-wheel head 11, the threaded grinding wheel 20 can be moved in the X-axis, Y-axis, and Z-axis directions, and the threaded grinding wheel 20 can also be rotated about the grinding-wheel rotation axis B1 along with the spindle 12.

Moreover, a table 13 is supported on the gear grinding machine 1 rotatably about a workpiece rotation axis C1 which is vertical. Moreover, a workpiece (machining-target external gear) W1 is detachably attached to the upper surface of the table 13. Thus, by driving the table 13, the workpiece W1 can be rotated about the workpiece rotation axis C1 along with the table 13.

Here, as shown in Figs. 1 and 2, the cylindrical threaded grinding wheel 20 is a single threaded grinding wheel for external gear grinding formed of a threaded grinding wheel (first threaded grinding wheel) 21 and a threaded grinding wheel (second threaded grinding wheel) 22 of two types differing in grinding performance.

The threaded grinding wheels 21 and 22 have the same grinding wheel specifications, except that the type of grinding wheel is different due to their differences in, for example, the type and size of abrasive grain, the type and bonding degree of bond, porosity, and so on. Specifically, the threaded grinding wheel 22 is capable of finer grinding than the threaded grinding wheel 21 and has higher grinding performance than the grinding performance of the threaded grinding wheel 21.

Hence, the threaded grinding wheel 21 is a finish grinding wheel for grinding of a workpiece W1 after heat treatment or a workpiece W1 rough-finished after heat treatment. On the other hand, the threaded grinding wheel 22 is a super-finish grinding wheel for finer grinding of a workpiece W1 ground by the threaded grinding wheel 21. Note that the grinding-wheel width of the threaded grinding wheel 21 and the grinding-wheel width of the threaded grinding wheel 22 may be set either to the same length or to different lengths.

Moreover, a ridge 21a is provided at the outer periphery of the threaded grinding wheel 21 in a helical pattern over the entire length of the threaded grinding wheel 21 in the grinding-wheel width direction (grinding-wheel axial direction). Finish grinding surfaces 21b are formed at left and right inclined faces of the ridge 21a. Likewise, a ridge 22a is provided at the outer periphery of the threaded grinding wheel 22 in a helical pattern over the entire length of the threaded grinding wheel 22 in the grinding-wheel width direction (grinding-wheel axial direction). Super-finish grinding surfaces 22b are formed at left and right inclined faces of the ridge 22a.

Specifically, the threaded grinding wheel 20 is formed as a connected body of grinding wheels obtained by connecting the threaded grinding wheels 21 and 22 at their end surfaces by means of adhesive or the like such that the ridges 21a and 22a of the threaded grinding wheels 21 and 22, which are disposed coaxially, are connected to each other. In addition, with the end surfaces of the threaded grinding wheels 21 and 22 being brought into contact with and connected to each other as described above, the finish grinding surfaces 21b of the threaded grinding wheel 21 and the super-finish grinding surfaces 22b of the threaded grinding wheel 22 form grinding surfaces that are flush with each other in the direction of the thread of the threaded grinding wheel 20.

Meanwhile, as will be described later in detail, in grinding a workpiece W1 with the threaded grinding wheel 20, the workpiece W1 is first finished with the threaded grinding wheel 21, and the workpiece W1 thus finished is then super finished with the threaded grinding wheel 22.

Here, as shown in Fig. 2, the threaded grinding wheels 21 and 22 have multiple grinding ranges L1 and L2 which are previously set therealong successively in the grinding-wheel width direction. These grinding ranges L1 and L2 are defined by a predetermined length in the grinding-wheel width direction and serve as use ranges each of which can be used for grinding one workpiece W1.

Specifically, for the threaded grinding wheel 21, n grinding ranges L1 including a grinding range L1(1), a grinding range L1(2), ... a grinding range L1(n-1), and a grinding range L1 (n) are set in this order from one end to the other end. Moreover, for the threaded grinding wheel 22, n grinding ranges L2 including a grinding range L2(1), a grinding range L2(2), ... a grinding range L2(n-1), and a grinding range L2(n) are set in this order from one end to the other end.

In other words, one of the grinding ranges L1 of the threaded grinding wheel 21 and one of the grinding ranges L2 of the threaded grinding wheel 22 are used for one workpiece W1. Moreover, by using each individual set of grinding ranges L1 and L2 of the threaded grinding wheels 21 and 22 as use ranges for one workpiece 1 as described above, one threaded grinding wheel 20 can grind n workpieces W1.

Thus, in grinding a workpiece W1 with the threaded grinding wheel 20, phase alignment is first performed between the threaded grinding wheel 21 and the workpiece W1, so that the finish grinding surfaces 21b of the threaded grinding wheel 21 in the grinding range L1(1) and left and right tooth surfaces of the workpiece W1 are meshed.

Thereafter, the threaded grinding wheel 20 is caused to cut in in the X-axis direction and fed in the Z-axis direction along with synchronous rotation of the threaded grinding wheel 20 and the workpiece W1 with the threaded grinding wheel 21 and the workpiece W1 in mesh with each other as mentioned above. As a result, the finish grinding surfaces 21b of the threaded grinding wheel 21 in the grinding range L1(1) grind the left and right tooth surfaces of the workpiece W1.

Then, the threaded grinding wheel 21 is moved away from the workpiece W1, and the threaded grinding wheel 20 is then shifted in the Y-axis direction (in the direction of the grinding-wheel rotation axis B1).

Thereafter, the super-finish grinding surfaces 22b of the threaded grinding wheel 22 in the grinding range L2(1) and left and right tooth surfaces of the workpiece W1 are meshed together.

Then, the threaded grinding wheel 20 is caused to cut in in the X-axis direction and fed in the Z-axis direction along with synchronous rotation of the threaded grinding wheel 20 and the workpiece W1 with the threaded grinding wheel 22 and the workpiece W1 in mesh with each other as mentioned above. As a result, the finish grinding surfaces 22b of the threaded grinding wheel 22 in the grinding range L2(1) grind the left and right tooth surfaces of the workpiece W1. In other words, the grinding of the first workpiece W1 with the threaded grinding wheel 20 is completed.

Thereafter, in grinding the second workpiece W1, the above-described grinding operations are performed using the finish grinding surfaces 21b in the grinding range L1(2) and the super-finish grinding surfaces 22b in the grinding range L2(2). Then, the same grinding operations are repeated by subsequently changing the grinding ranges L1 and L2 until the n-th workpiece W1 is ground.

Then, once the grinding of the n-th workpiece W1 is completed, the threaded grinding wheel 20 is dressed with a dresser (not shown). In this process, the threaded grinding wheels 21 and 22 can be continuously dressed with one dresser because the finish grinding surfaces 21b of the threaded grinding wheel 21 and the super-finish grinding surfaces 22b of the threaded grinding wheel 22 are connected in such a way as to be flush with each other.

Thus, the threaded grinding wheel 20 for gear grinding according to the present can achieve a simple structure since it is formed of the threaded grinding wheel 21 and the threaded grinding wheel 22 of two types differing in grinding performance, and the threaded grinding wheel 20 can also accurately grind workpieces W1 since two types of grinding processes can be performed successively.

Moreover, the described gear grinding method makes it possible to properly select one of the threaded grinding wheel 21 and the threaded grinding wheel 22 of two types differing in grinding performance in the threaded grinding wheel 20 formed of the threaded grinding wheel 21 and the threaded grinding wheel 22. Thus, two types of grinding processes can be performed successively, and therefore workpieces W1 can be accurately ground.

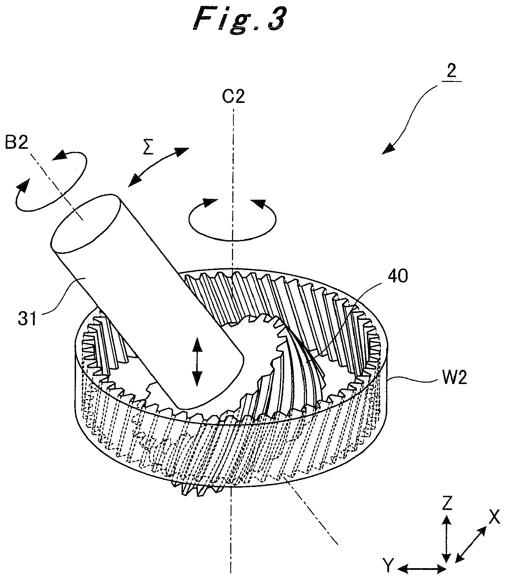

Next, a threaded grinding wheel for gear grinding and a gear grinding method using this according to the present invention will be described in detail with reference to Figs. 3 to 5.

As shown in Fig. 3, a spindle (grinding-wheel arbor) 31 is supported on a gear grinding machine 2 movably in an X-axis direction (grinding-wheel cut-in direction) and a Y-axis direction which are horizontal, as well as in a Z-axis direction (grinding-wheel feed direction) which is vertical, through an unillustrated grinding-wheel head. Further, the spindle 31 is supported on the grinding-wheel head rotatably about a grinding-wheel rotation axis B2. A threaded grinding wheel 40 for internal gear grinding formed in a barrel shape is detachably mounted to the tip of the spindle 31.

Thus, by driving the grinding-wheel head, the threaded grinding wheel 40 can be moved in the X-axis, Y-axis, and Z-axis directions, and the threaded grinding wheel 40 can also be rotated about the grinding-wheel rotation axis B2 along with the spindle 31.

Moreover, a workpiece (machining-target internal gear) W2 is attached to the gear grinding machine 2 through an unillustrated table rotatably about a workpiece rotation axis C2 which is vertical. Thus, by driving the table, the workpiece W2 can be rotated about the workpiece rotation axis C2.

Note that the spindle 31 (grinding-wheel head) is supported turnably about an unillustrated grinding-wheel turn axis extending in the X-axis direction. Thus, by turning the spindle 31 about the grinding-wheel turn axis, the turn angle (inclination angle) of the grinding-wheel rotation axis B2 can be changed. In this way, the axis crossing angle between the grinding-wheel rotation axis B2 and the workpiece rotation axis C2 (hereinafter, referred to as the axis angle Σ) can be adjusted according to the helix angle of the workpiece W2. In other words, the threaded grinding wheel 40 during grinding is rotated about the grinding-wheel rotation axis B2 which crosses the workpiece rotation axis C2 of the workpiece W2 at the axis angle Σ.

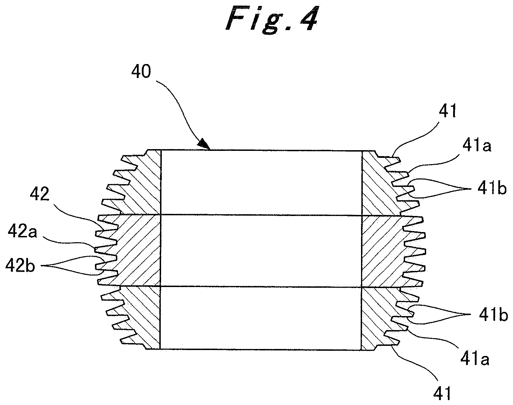

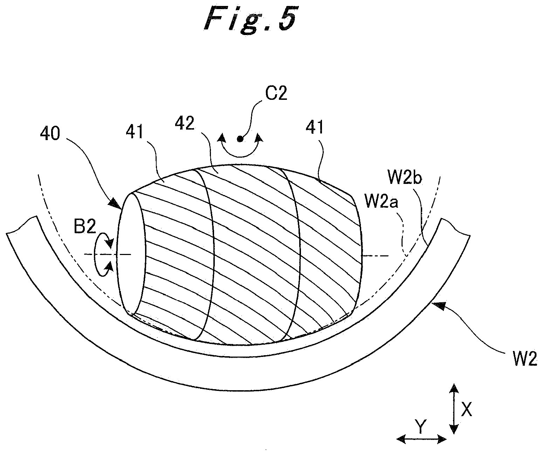

Here, as shown in Figs. 4 and 5, the barrel-shaped threaded grinding wheel 40 is a single threaded grinding wheel for internal gear grinding formed of threaded grinding wheels (first threaded grinding wheel) 41 and a threaded grinding wheel (second threaded grinding wheel) 42 of two types differing in grinding performance.

Specifically, the threaded grinding wheel 40 is formed of the threaded grinding wheels 41 provided on two opposite sides in the grinding-wheel width direction and the threaded grinding wheel 42 provided between the threaded grinding wheels 41. As its entire shape in the grinding-wheel width direction, the threaded grinding wheel 40 is formed in such a barrel shape as to gradually decrease in diameter from the center in the grinding-wheel width direction toward either end in the grinding-wheel width direction. Moreover, by forming the threaded grinding wheel 40 in a barrel shape as described above, the threaded grinding wheel 40 disposed at the axis angle Σ can be brought into mesh with the workpiece W2 over the entire length thereof in the grinding-wheel width direction. Note that the grinding-wheel width of the threaded grinding wheels 41 and the grinding-wheel width of the threaded grinding wheel 42 may be set either to the same length or to different lengths.

The threaded grinding wheels 41 and 42 have the same grinding wheel specifications, except that the type of grinding wheel is different due to their differences in, for example, the type and size of abrasive grain, the type and bonding degree of bond, porosity, and so on. Specifically, the threaded grinding wheel 42 is capable of finer grinding than the threaded grinding wheels 41 and has higher grinding performance than the grinding performance of the threaded grinding wheels 41.

Hence, the threaded grinding wheels 41 are finish grinding wheels for grinding of a workpiece W2 after heat treatment or a workpiece W2 rough-finished after heat treatment. On the other hand, the threaded grinding wheel 42 is a super-finish grinding wheel for finer grinding of a workpiece W2 ground by the threaded grinding wheels 41.

Moreover, each threaded grinding wheel 41 is formed in such a barrel shape as to gradually decrease in diameter from one end in the grinding-wheel width direction toward the other end in the grinding-wheel width direction. Further, ridges 41a are provided at the outer periphery of the threaded grinding wheel 41 in helical patterns over the entire length of the threaded grinding wheel 41 in the grinding-wheel width direction (grinding-wheel axial direction). Finish grinding surfaces 41b are formed at left and right inclined faces of each ridge 41a.

On the other hand, the threaded grinding wheel 42 is formed in such a barrel shape as to gradually decrease in diameter from the center in the grinding-wheel width direction toward either end in the grinding-wheel width direction. Further, ridges 42a are provided at the outer periphery of the threaded grinding wheel 42 in helical patterns over the entire length of the threaded grinding wheel 42 in the grinding-wheel width direction (grinding-wheel axial direction). Super-finish grinding surfaces 42b are formed at left and right inclined faces of each ridge 42a.

Specifically, the threaded grinding wheel 40 is formed as a connected body of grinding wheels obtained by connecting the threaded grinding wheels 41 and 42 at their end surfaces by means of adhesive or the like such that the ridges 41a and 42a of the threaded grinding wheels 41 and 42, which are disposed coaxially, are connected to each other. In addition, with the end surfaces of the threaded grinding wheels 41 and 42 being brought into contact with and connected to each other as described above, the finish grinding surfaces 41b of the threaded grinding wheels 41 and the super-finish grinding surfaces 42b of the threaded grinding wheel 42 form grinding surfaces that are flush with each other in the direction of the threads of the threaded grinding wheel 40.

Meanwhile, as will be described later in detail, in grinding a workpiece W2 with the threaded grinding wheel 40, the workpiece W2 is first finished with the threaded grinding wheels 41, and the workpiece W2 thus finished is then super finished with the threaded grinding wheel 42.

Here, as shown in Fig. 5, the workpiece W2 before the grinding is given a machining allowance (grinding allowance) W2a of a predetermined thickness from a tooth profile W2b which is the final tooth shape after the grinding. On the other hand, the edge profiles of the ridges 41a and 41b of the threaded grinding wheel 40 are designed based on the tooth profile W2b. Here, the machining allowance W2a and the tooth profile W2b of the workpiece W2 are shown in Fig. 5 schematically by curves.

Thus, in grinding a workpiece W2 with the threaded grinding wheel 40, the first grinding stage involves grinding the machining allowance W2a of the workpiece W2 only with the finish grinding surfaces 41b of the threaded grinding wheel 41 at either end of the threaded grinding wheel 40 in the grinding-wheel width direction. Then, as the grinding continues further, thereby thinning the machining allowance W2a, the threaded grinding wheel 40 shifts its grinding range from either end in the grinding-wheel width direction toward the center in the grinding-wheel width direction, and eventually grinds the remaining machining allowance W2a only with the super-finish grinding surfaces 42b of the threaded grinding wheel 42 at the center of the threaded grinding wheel 40 in the grinding-wheel width direction. As a result, the tooth profile W2b is obtained.

Thus, in grinding a workpiece W2 with the threaded grinding wheel 40, the threaded grinding wheel 40 is first disposed at the axis angle Σ corresponding to the helix angle of the workpiece W2.

Thereafter, phase alignment is performed between the threaded grinding wheel 40 and the workpiece W2, and they are meshed together. Here, immediately after the meshing, the finish grinding surfaces 41a of the threaded grinding wheels 41 and the machining allowance W2a of the workpiece W2 are in mesh with each other.

Then, the threaded grinding wheel 40 is caused to cut in in the X-axis direction and fed in the Z-axis direction along with synchronous rotation of the threaded grinding wheel 20 and the workpiece W2 with the threaded grinding wheels 41 and the workpiece W2 in mesh with each other as mentioned above. As a result, the finish grinding surfaces 41b of the threaded grinding wheels 41 grind the machining allowance W2a of the workpiece W2.

Thereafter, as the grinding with the finish grinding surfaces 41b of the threaded grinding wheels 41 continues, the machining allowance W2a is gradually thinned. When the machining allowance W2a reaches a predetermined thickness, the contact of the threaded grinding wheels 41 with the workpiece W2 becomes small whereas the contact of the threaded grinding wheel 42 becomes very large. That is, the grinding with the finish grinding surfaces 41b of the threaded grinding wheels 41 is completed, and grinding with the super-finish grinding surfaces 42b of the threaded grinding wheel 42 is started.

Furthermore, as the grinding continues, the super-finish grinding surfaces 42a of the threaded grinding wheel 42 grind the machining allowance W2a of the workpiece W2 ground to the predetermined thickness by the finish grinding surfaces 41b of the threaded grinding wheels 41. As a result, the super-finish grinding surfaces 42a of the threaded grinding wheel 42 eventually form the tooth profile W2b of the workpiece W2.

Meanwhile, the finish grinding surfaces 41b and the super-finish grinding surfaces 42b are worn away and their sharpness decreases as the threaded grinding wheel 40 is used to grind a certain number of workpieces W2. For this reason, the finish grinding surfaces 41b and the super-finish grinding surfaces 42b are dressed periodically with a dresser (not shown). In this process, the threaded grinding wheels 41 and 42 can be continuously dressed with one dresser because the finish grinding surfaces 41b of the threaded grinding wheels 41 and the super-finish grinding surfaces 42b of the threaded grinding wheel 42 are connected in such a way as to be flush with each other.

Thus, the threaded grinding wheel 40 for gear grinding according to the present can achieve a simple structure since it is formed of the threaded grinding wheels 41 and the threaded grinding wheel 42 of two types differing in grinding performance, and the threaded grinding wheel 40 can also accurately grind workpieces W2 since two types of grinding processes can be performed successively.

Moreover, the gear grinding method according to the present invention makes it possible to sequentially use the threaded grinding wheels 41 and the threaded grinding wheel 42 of two types differing in grinding performance in the threaded grinding wheel 40 formed of the threaded grinding wheels 41 and the threaded grinding wheel 42. Thus, two types of grinding processes can be performed successively, and therefore workpieces W2 can be accurately ground.

### INDUSTRIAL APPLICABILITY

The present invention is applicable to threaded grinding wheels for gear grinding and gear grinding methods which allow accurate grinding of gears with thick machining allowances.

## Claims

1. A barrel-shaped threaded grinding wheel for gear grinding which grinds a machining-target internal gear (W2) by rotating in mesh with the machining-target internal gear (W2), wherein the threaded grinding wheel comprises:
finish threaded grinding wheels (41) which are formed so as to gradually decrease in diameter from one end in a grinding-wheel width direction toward the other end in the grinding-wheel width direction, and in which ridges (41a) are provided at each outer periphery of the finish threaded grinding wheels (41) in helical patterns over the entire length of the finish threaded grinding wheels (41) in the grinding-wheel width direction and finish grinding surfaces (41b) are formed at left and right inclined faces of each ridge (41a); and
**characterized in that** the threaded grinding wheel comprises:
a super-finish threaded grinding wheel (42) which is formed so as to gradually decrease in diameter from the center in the grinding-wheel width direction toward either end in the grinding-wheel width direction, and in which ridges (42a) are provided at an outer periphery of the super-finish threaded grinding wheel (42) in helical patterns over the entire length of the super-finish threaded grinding wheel (42) in the grinding-wheel width direction and super-finish grinding surfaces (42b) having higher grinding performance than the grinding performance of the finish grinding surfaces (41b) are formed at left and right inclined faces of each ridge (42a),
wherein the finish threaded grinding wheels (41) are provided on two opposite sides in the grinding-wheel width direction, the super-finish threaded grinding wheel (42) is provided between the finish threaded grinding wheels (41), and end surfaces of the finish threaded grinding wheels (41) and end surfaces of the super-finish threaded grinding wheel (42) are brought into contact with and coaxially connected each other so that the finish grinding surfaces (41b) of the finish threaded grinding wheels (41) and the super-finish grinding surfaces (42b) of the super-finish threaded grinding wheel (42) form grinding surfaces that are flush with each other in a direction of threads of the threaded grinding wheel (40).

2. A gear grinding machine comprising the barrel-shaped threaded grinding wheel according to claim 1.

3. A gear grinding method using the barrel-shaped threaded grinding wheel according to claim 1, **characterized in that** the gear grinding method comprises:
grinding a machining allowance of the machining-target internal gear (W2) with the finish threaded grinding wheels (41) to a predetermined thickness for first finishing; and grinding the machining allowance ground to the predetermined thickness by the finish threaded grinding wheels (41) with the super-finish threaded grinding wheel (42) for super finishing.

## Patentansprüche

1. Tonnenförmige Gewindeschleifscheibe zum Zahnradschleifen, die ein Innenzahnrad (W2) eines Bearbeitungsziels durch Drehen im Eingriff mit dem Innenzahnrad (W2) des Bearbeitungsziels schleift, wobei die Gewindeschleifscheibe umfasst:
mit einem Gewinde versehene Schlichtschleifscheiben (41), die so ausgebildet sind, dass der Durchmesser von einem Ende in einer Richtung einer Schleifscheibenbreite zu dem anderen Ende in der Richtung der Schleifscheibenbreite allmählich abnimmt und in denen Gewindezähne (41a) an jedem Außenumfang der mit einem Gewinde versehenen Schlichtschleifscheiben (41) in schraubenförmigen Mustern über die gesamte Länge der mit einem Gewinde versehenen Schlichtschleifscheiben (41) in der Richtung der Schleifscheibenbreite bereitgestellt sind und Schlichtschleifoberflächen (41b) an links- und rechtsgeneigten Flächen jedes Gewindezahns (41a) ausgebildet sind; und
**dadurch gekennzeichnet, dass** die Gewindeschleifscheibe umfasst:
eine mit einem Gewinde versehene Feinschlichtschleifscheibe (42), die so ausgebildet ist, dass der Durchmesser von der Mitte in der Richtung der Schleifscheibenbreite zu beiden Enden in der Richtung der Schleifscheibenbreite allmählich abnimmt und in der Gewindezähne (42a) an einem Außenumfang der mit einem Gewinde versehenen Feinschlichtschleifscheibe (42) in schraubenförmigen Mustern über die gesamte Länge der mit einem Gewinde versehenen Feinschlichtschleifscheibe (42) in der Richtung der Schleifscheibenbreite bereitgestellt sind und Feinschlichtschleifoberflächen (42b), die eine höhere Schleifleistung aufweisen als die Schleifleistung der Schlichtschleifoberflächen (41b), an links- und rechtsgeneigten Flächen jedes Gewindezahns (42a) ausgebildet sind, wobei die mit einem Gewinde versehenen Schlichtschleifscheiben (41) an zwei gegenüberliegenden Seiten in der Richtung der Schleifscheibenbreite bereitgestellt sind, die mit einem Gewinde versehene Feinschlichtschleifscheibe (42) zwischen den mit einem Gewinde versehenen Schlichtschleifscheiben (41) bereitgestellt ist und Endoberflächen der mit einem Gewinde versehenen Schlichtschleifscheiben (41) und Endoberflächen der mit einem Gewinde versehenen Feinschlichtschleifscheibe (42) in Kontakt gebracht und koaxial so miteinander verbunden werden, dass die Schlichtschleifoberflächen (41b) der mit einem Gewinde versehenen Schlichtschleifscheiben (41) und die Feinschlichtschleifoberflächen (42b) der mit einem Gewinde versehenen Feinschlichtschleifscheibe (42) Schleifoberflächen ausbilden, die in einer Richtung der Gewinde der Gewindeschleifscheibe (40) miteinander bündig sind.

2. Zahnradschleifmaschine, die die tonnenförmige Gewindeschleifscheibe nach Anspruch 1 umfasst.

3. Zahnradschleifverfahren unter Verwendung der tonnenförmigen Gewindeschleifscheibe nach Anspruch 1, **dadurch gekennzeichnet, dass** das Zahnradschleifverfahren umfasst:
Schleifen einer Bearbeitungszugabe des Innenzahnrads (W2) des Bearbeitungsziels mit den mit einem Gewinde versehenen Schlichtschleifscheiben (41) auf eine zuvor bestimmte Dicke zu einem ersten Schlichten; und
Schleifen der Bearbeitungszugabe, die durch die mit einem Gewinde versehenen Schlichtschleifscheiben (41) auf die vorgegebene Dicke geschliffen wurde, mit der mit einem Gewinde versehenen Feinschlichtschleifscheibe (42) zu einer Feinschlichtung.

## Revendications

1. Meule filetée en forme de corps cylindrique pour le meulage d'engrenage, qui meule un engrenage interne cible d'usinage (W2) en tournant, en engrènement, avec l'engrenage interne cible d'usinage (W2), dans laquelle la meule filetée comprend :
des meules filetées de finition (41) qui sont formées afin de réduire progressivement du point de vue du diamètre, d'une extrémité dans le sens de la largeur de la meule vers l'autre extrémité dans le sens de la largeur de la meule, et dans lesquelles des crêtes (41a) sont prévues sur chaque périphérie externe des meules filetées de finition (41) en motif hélicoïdaux sur toute la longueur des meules filetées de finition (41) dans le sens de la largeur de la meule et des surfaces de meulage de finition (41b) sont formées sur des faces inclinées gauche et droite de chaque crêtes (41a) ; et
**caractérisée en ce que** la meule filetée comprend :
une meule filetée de superfinition (42) qui est formée afin de réduire progressivement du point de vue du diamètre, du centre dans le sens de la largeur de la meule vers chaque extrémité dans le sens de la largeur de la meule, et dans laquelle des crêtes (42a) sont prévues sur une périphérie externe de la meule filetée de superfinition (42) en motif hélicoïdaux sur toute la longueur de la meule filetée de superfinition (42) dans le sens de la largeur de la meule et des surfaces de meulage de superfinition (42b) ayant une performance de meulage supérieure à la performance de meulage des surfaces de meulage de finition (41b) sont formées sur des faces inclinées gauche et droite de chaque crête (42a),
dans laquelle les meules filetées de finition (41) sont prévues sur deux côtés opposés dans le sens de la largeur de la meule, la meule filetée de superfinition (42) est prévue entre les meules filetées de finition (41), et des surfaces d'extrémité des meules filetées de finition (41) et des surfaces d'extrémité de la meule filetée de superfinition (42) sont amenées en contact entre elles et raccordées de manière coaxiale entre elles, de sorte que les surfaces de meulage de finition (41b) des meules filetées de finition (41) et les surfaces de meulage de superfinition (42b) de la meule filetée de superfinition (42) forment des surfaces de meulage qui sont de niveau entre elles dans une direction de filetages de la meule filetée (40).

2. Machine à meuler des engrenages comprenant la meule filetée en forme de corps cylindrique selon la revendication 1.

3. Procédé de meulage d'engrenage utilisant la meule filetée en forme de corps cylindrique selon la revendication 1, **caractérisé en ce que** le procédé de meulage d'engrenage comprend :
de meuler une tolérance d'usinage de l'engrenage interne cible d'usinage (W2) avec les meules filetées de finition (41) à une épaisseur prédéterminée pour la première finition ; et de meuler la tolérance d'usinage meulée pour l'épaisseur prédéterminée par les meules filetées de finition (41) avec la meule filetée de superfinition (42) pour une superfinition.
